# EUROPEAN PATENT APPLICATION

(11) **EP 1 533 551 A1**
(43) Date of publication of application: **25.05.2005**
(21) Application number: 04425814.3
(22) Date of filing: 29.10.2004
(51) Int. Cl.: F16K 17/30

(54) **Excess flow valve**

(30) Priority: 18.11.2003 IT BS20030065 U
(71) Applicant: Emer S.r.l., 25060 Collebeato, Brescia (IT)
(72) Inventor: Gobbi, Francesco, 25060 Collebeato (Brescia) (IT)
(74) Representative: Sangiacomo, Fulvia

(57) **Abstract**

The invention concerns an excess flow valve for fluid circulation systems, such as gas supplied vehicle systems, comprising a body shared with a part of a body of a valve or solenoid valve to be connected to a gas cylinder. In the body a housing (16) is formed in communication with an input passage, an output passage and additional ducts (14, 15) and defining a valve seat (17) associated with a float valve member (18) moving axially between an open position maintained by a spring (25) and a closed position caused by excess pressure at the input passage compared with the one at the output passage.

## Description

### Field of the Invention

This invention concerns an excess flow valve for fluid circulation systems, in particular, but not exclusively, for gas powered vehicle systems.

### State of the Technique

Various excess flow valves are already known on the market, which, however, are separate units which when used in a fluid circulation system are associated with other components. For example, in gas powered vehicles systems, the excess fluid valve can be associated, but not integrated, with a valve device which is applied to a cylinder or container to manage the delivery of the gaseous fluid to the point of use.

### Object of the Invention

The primary object of the invention is to propose an excess fluid valve which integrates with a valve or solenoid valve for fluid circulation systems to achieve a simpler and less expensive assembly operation and easier installation due to the fact that the two valve devices occupy a single housing.

This object is achieved, according to the invention, with an excess flow valve which is characterised by the fact that it comprised a body in common with a part of a body of a valve or solenoid valve to be connected to a cylinder to control the flow of fluid in output from said cylinder towards the point of use.

### Brief Description of Drawings

More details of the invention will however become more apparent in the following description made in reference to the enclosed indicative and not limiting drawings, in which:
Fig.1 is a cross section of the excess flow valve opened,
Fig.2 shows an enlargement of the circled detail in Fig.1; and
Fig.3 shows an analogous cross section to the one in Fig. 1, but with the excess flow valve closed.

### Detailed Description of the Invention

In said drawings, a part 11 of a body of a valve or solenoid valve is represented, which can be applied to a gaseous fluid cylinder under pressure for feeding gas operating vehicles.

The body 11 is formed with an input passage 12 in communication with the fluid cylinder, an output passage 13 to supply the fluid towards the point of use and additional ducts 14, 15 for delivery of fluid to the various typical control and safety devices.

In association with the input passage 12, in the body 11 a housing 16 is provided in fluid communication with the output passage 13 and with the additional ducts 14, 15.

To be more precise, the housing 16 has a bottom wall 16' in which a valve seat 17 is formed and places the housing itself in communication with the output passage 13. The additional ducts 14, 15 extend from said housing 16 in a position upstream of said valve seat 17.

A float valve member 18 is positioned and sliding in the housing 16 and is associated with the valve seating 17. The valve member 18 is held axially in the housing 16 by means of a ring nut 19 screwed into the body 11 on a level with the input passage 12. The valve member 18 has a proximal part which rests against the ring nut 19 and a distal part 18', on a level with the additional ducts 14, 15, which is tapered and which finishes in a conical end 20 made to fit into the valve seat 17 to open and close the latter in relation to the axial movements of the valve member in the housing.

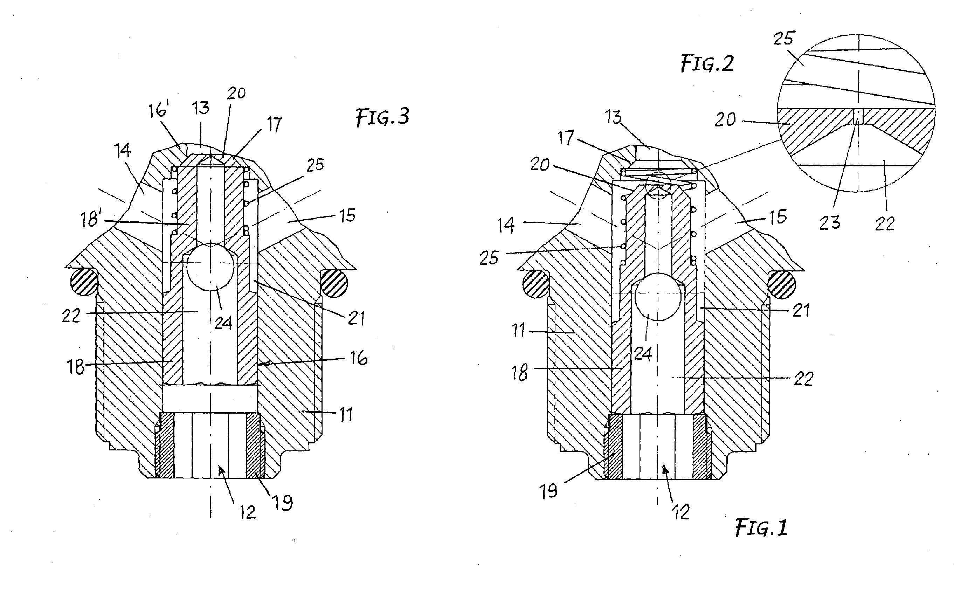

The tapered distal part 18' of the valve member 18 forms, together with the internal surface of the housing 16, an annular duct 21 which is permanently in communication with the additional ducts 14, 15 whatever the position of the valve member is. In addition, the valve member 18 has an axial bore 22 opening towards the cylinder through the ring nut 19 and terminating on a level with the distal conical end 20 in a tapered port 23 - Fig. 2 - facing towards the output passage 13. The axial bore 22 is also in communication with the round duct 21 by means of radial apertures 24 provide in the valve member 18.

Finally, a compression spring 25 is positioned between the valve member 18 and the bottom wall 16' of the housing 16, so as to push and, hold normally said valve member retracted and resting against the ring nut 19, in an open position of the valve seat as shown in Fig. 1.

In fact, the spring 25 will be calibrated so as to hold the valve member 18 in this open position when the internal pressure of the cylinder is within the preset values and does not change the parameters of the system fed by the fluid coming from the cylinder.

On the other hand, when there are causes which create an anomalous increase in the pressure at the input entrance 12, consequently in the cylinder, compared to the system downstream of the output passage 13, the valve member 18 moves into the closed position shown in Fig. 3, interrupting the flow of gas from the cylinder, but none the less leaving the envisaged control and safety devices, fed, through the additional ducts 14,15. The port 23 at the distal end of the stop 18 is used to facilitate the return of the valve member to the open position to reset the function once the causes which triggered the intervention of the excess flow valve have been removed.

## Claims

1. Excess flow valve for fluid circulation systems, such as gas supplied vehicle systems, **characterised by** a body (11) in common with a part of a body of a valve or solenoid valve to be connected to a cylinder to control the flow of fluid in output from said cylinder towards the point of use.

2. Excess flow valve for fluid according to claim 1, in which said body (11) has an input passage (12) in communication with the fluid cylinder, an output passage (13) of the fluid towards the user point and additional ducts (14,15) for delivery of fluid to control and safety devices, and where in line with said input passage (12) a housing (16) is provided in communication with said additional ducts (14, 15) and forming a valve seat (17) in communication with said output passage (13), and in said housing (16) a float valve member (18) is mounted movable axially between an open and closed position of said valve seat (17), the open position being normally maintained by a spring (25) associated with the valve member, while the closed position, in opposition to the action of said spring, is caused by excess pressure at the input passage compared to the one at the output passage.

3. Excess flow valve for fluid according to claim 2, in which said additional ducts (14,15) are upstream of the valve seating (17), in which the valve member (18) has a proximal part which rests against the stop ring nut (19) on a level with said input passage (12) and a distal part on a level with the additional ducts (14,15), said distal part being tapered and having a conical end (20) designed to interact with the valve seat (17) to open and close the latter in answer to the axial movements of the valve member in the housing.

4. Excess flow valve for fluid according to claims 2 and 3, in which said distal tapered part of the valve member (18) forms together with the internal surface of the housing (16) an annular duct (21) in communication with the additional ducts (14, 15) whatever the position of the valve member, and where the valve member has an axial bore (22) open towards the cylinder through said ring nut (19) and communicating with said annular duct (21) through radial holes (24) machined in the valve member, said axial bore opening on a level with the distal conical end (20) in a tapered port (23) in communication with the output passage (13) of said axial bore (22).
